# DEMANDE DE BREVET EUROPEEN

(11) **EP 1 255 409 A1**
(43) Date de publication de la demande: **06.11.2002**
(21) Numéro de dépôt: 02076505.3
(22) Date de dépôt: 17.04.2002
(51) Int. Cl.: H04N 7/26, H04N 7/24

(54) **Conversion d'un format BIFS textuel vers un format BIFS binaire**

(30) Priorité: 24.04.2001 FR 0105503
(71) Demandeur: Koninklijke Philips Electronics N.V., 5621 BA Eindhoven (NL)
(72) Inventeur: Duquesnois, Laurent, Société Civile S.P.I.D., 75008 Paris (FR)
(74) Mandataire: de la Fouchardière, Marie-Noelle

(57) **Abrégé**

L'invention concerne le domaine de la description de scènes multimédia. Un flux de données au format BIFS 121 contient de façon classique deux types de données, des descriptions de scènes 122 et des commandes 123. Conformément à l'invention, un dispositif de traitement de données destiné à convertir des données d'un premier format, par exemple le format BIFS textuel, vers un deuxième format, par exemple le format BIFS binaire, comprend un transcodeur de scène 101 destiné à convertir les descriptions de scènes 122 du premier format vers le deuxième format et un transcodeur de commandes 111 destiné à convertir les commandes 123 du premier format vers le deuxième format et ayant accès à des informations contenues dans la description de scène. L'invention présente notamment un intérêt pour la conception de description de scènes multimédia utilisant par exemple le standard MPEG-4.

## Description

### DOMAINE TECHNIQUE

L'invention concerne un dispositif de traitement de données pour convertir des données d'un premier format vers un deuxième format, lesdites données comprenant au moins une description de scène et une commande destinée à modifier cette description de scène.
Elle concerne également un procédé de traitement de données pour convertir des données d'un premier format vers un deuxième format, lesdites données comprenant au moins une description de scène et une commande destinée à modifier cette description de scène.
Elle concerne enfin un programme comprenant des instructions de code de programme pour l'exécution des étapes de ce procédé lorsque ledit programme est exécuté sur un processeur. L'invention trouve son application, par exemple, dans un système destiné à une conception de données audiovisuelles à un format MPEG.

### ETAT DE LA TECHNIQUE ANTERIEURE

La norme MPEG-4 est notamment décrite dans le document ISO/IEC 14496-1 intitulé « Information Technology - Very Low Bit Rate Audio-Visual Coding - part 1 : systems » publié par l'ISO en 1999. Cette norme décrit notamment un format binaire de scène BIFS ayant pour but de décrire des relations spatio-temporelles entre divers objets graphiques d'une scène. Des informations nécessaires à une composition d'une scène constituent une description de scène. Un concept de description de scène est exposé au paragraphe 9 de cette norme. Une description de scène possède une structure arborescente composée de noeuds, chaque noeud correspondant à un objet et contenant un ensemble de champs. Des routes sont utilisées pour assigner la valeur d'un champ à un autre champ. Un flux de données au format BIFS comprend deux types de données, des descriptions de scène et des commandes. Les commandes peuvent être de deux types :
- des commandes de remplacement de scène qui comprennent une description de scène entière.
- des commandes de modification de scène qui comprennent des modifications à apporter à une description de scène, tel un remplacement d'un noeud par un autre, un ajout ou une suppression d'un noeud, une modification d'un champ ou d'une route.
Une description de scène est généralement écrite par un auteur en utilisant un format convivial, par exemple un format textuel. Les commandes sont généralement écrites dans le même format. Ce format sera appelé par la suite format BIFS textuel. Cependant, pour un transport d'un flux de données au format BIFS, il est nécessaire de convertir le format BIFS textuel en un format binaire, que l'on appellera par la suite format BIFS binaire. En effet, une telle conversion permet de transporter une quantité plus grande d'informations en un même temps. Le format BIFS binaire ainsi que la conversion du format BIFS textuel vers le format BIFS binaire sont décrits dans la norme citée ci-dessus. Cette norme décrit comment les descriptions de scène doivent être converties et comment les commandes doivent être converties du format BIFS textuel vers le format BIFS binaire. Cependant, la norme citée ci-dessus ne décrit pas de dispositif permettant d'effectuer la conversion du format BIFS textuel vers le format BIFS binaire.

### EXPOSE DE L'INVENTION

Un but de l'invention est de proposer un dispositif permettant d'effectuer une conversion d'un format BIFS textuel vers un format BIFS binaire.

Un dispositif de traitement de données selon l'invention et tel que défini dans le paragraphe d'ouverture est caractérisé en ce qu'il comprend :
- un transcodeur de scène pour convertir la description de scène du premier format vers le deuxième format et
- un transcodeur de commandes pour convertir la commande du premier format vers le deuxième format et ayant accès à des informations contenues dans le transcodeur de scène.

Un procédé de traitement de données selon l'invention et tel que défini dans le paragraphe d'ouverture est caractérisé en ce qu'il comprend :
- une étape de transcodage de scène pour convertir la description de scène du premier format vers le deuxième format et
- une étape de transcodage de commandes pour convertir la commande du premier format vers le deuxième format grâce à des informations élaborées lors de l'étape de transcodage de scène.
Conformément à l'invention, un flux de données BIFS textuel est converti en un flux de données BIFS binaire de la façon suivante. Les données relatives à la description de scène sont converties par le transcodeur de scène comme il est décrit dans la norme citée ci-dessus et les données relatives aux commandes sont séparément converties par le transcodeur de commandes comme il est décrit dans la norme citée ci-dessus. Cependant, pour pouvoir convertir les données relatives aux commandes, le transcodeur de commandes doit avoir accès à des informations contenues dans le transcodeur de scène, comme des noms et des identifiants de noeuds. En effet, chaque noeud de la description de scène possède un nom et un identifiant. Le nom est un texte qui permet d'identifier un noeud de façon conviviale. L'identifiant est un nombre qui indique une place d'un noeud dans la description de scène. Seul l'identifiant d'un noeud est converti au format BIFS binaire. Or les commandes au format BIFS textuel ne contiennent que les noms de noeuds. Par conséquent, le transcodeur de commandes a besoin d'une table de correspondance entre les noms et les identifiants des noeuds, cette table étant contenue dans le transcodeur de scène. De la sorte, lorsqu'une commande modifie la description de scène, il n'est pas nécessaire de convertir à nouveau toute la description de scène du format BIFS textuel vers le format BIFS binaire, mais seulement la commande. Ainsi, la conversion est plus rapide, ce qui peut être avantageux dans des applications ayant des contraintes de type temps réel.

Dans un mode de réalisation particulièrement avantageux de l'invention, un dispositif de traitement de données tel que décrit ci-dessus est caractérisé en ce qu'il comprend :
- une interface graphique ;
- un compositeur apte à délivrer sur l'interface graphique une représentation audiovisuelle de la description de scène ;
- des moyens de modification reliés à ladite interface graphique et aptes à effectuer au moins une modification de ladite représentation audiovisuelle et
- des moyens d'édition aptes à générer au moins une commande dans le premier format, ladite commande étant représentative de la modification.
Ce mode de réalisation permet à un auteur de modifier de façon conviviale une description de scène. En effet, grâce au compositeur et à l'interface graphique, l'auteur possède à chaque instant une représentation audiovisuelle de la description de scène qu'il désire modifier. Grâce à une souris, un clavier ou tout autre moyen de modification relié à l'interface graphique, il modifie à sa guise cette représentation audiovisuelle. Des moyens d'édition permettent de générer des commandes au format BIFS textuel à partir des modifications effectuées par l'auteur. De tels moyens d'édition sont connus de l'homme du métier sous le terme de 'système auteur' (en anglais 'authoring tool'). En outre, ce mode de réalisation permet d'utiliser des commandes dynamiques, c'est-à-dire des commandes engendrant une modification de la description de scène ne prenant pas effet immédiatement, tout en conservant son aspect convivial. Par exemple, il est possible d'effectuer une commande destinée à engendrer la modification d'un noeud à un instant futur donné. Si l'on se contentait de convertir au format BIFS binaire la description de scène au moment où la commande est effectuée, celle-ci ne serait pas prise en compte, la modification ne prenant effet qu'à un instant futur.

Dans la mesure où les étapes décrites ci-dessus peuvent être effectuées par un logiciel, l'invention prévoit également un programme comprenant des instructions de code de programme pour l'exécution des étapes du procédé décrit ci-dessus lorsque ledit programme est exécuté sur un processeur.

### BREVE DESCRIPTION DES FIGURES

L'invention sera mieux comprise et d'autres détails apparaîtront dans la description qui va suivre en regard des dessins annexés qui sont donnés à titre d'exemples non limitatifs et dans lesquels :
- la figure 1 est un diagramme bloc illustrant des caractéristiques de l'invention ;
- les figures 2a et 2b illustrent deux exemples de dispositifs de traitement de données selon l'art antérieur permettant une conversion de données d'un premier format vers un deuxième format ;
- la figure 3 illustre un dispositif de traitement de données conforme à un mode de réalisation particulièrement avantageux de l'invention ;
- la figure 4 illustre une interface graphique pouvant être utilisée dans un mode de réalisation particulièrement avantageux de l'invention ;
- la figure 5 illustre un réseau de télécommunications utilisant au moins un dispositif de traitement de données selon l'invention.

### EXPOSE DETAILLE D'AU MOINS UN MODE DE REALISATION DE L'INVENTION

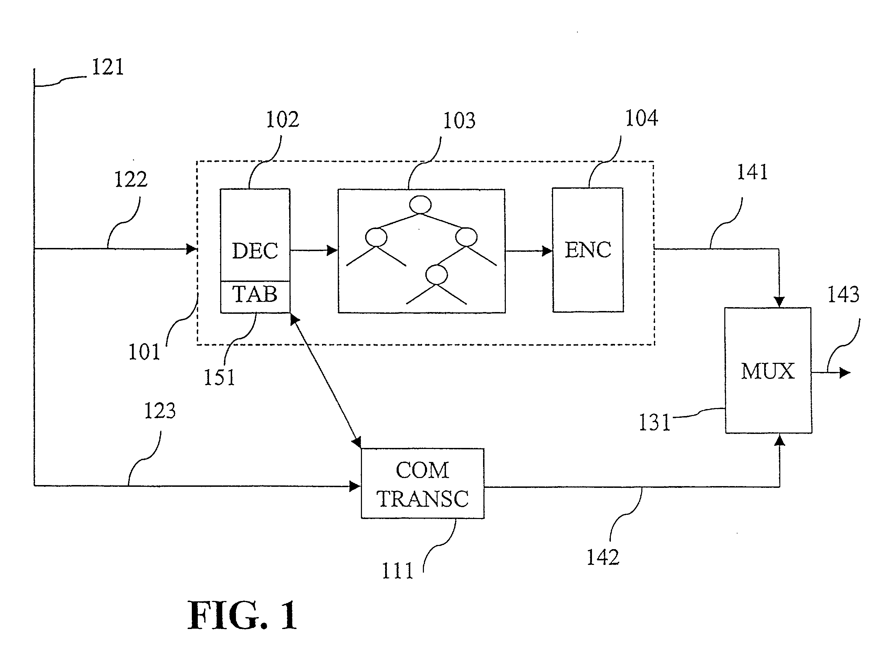

La figure 1 illustre des caractéristiques de l'invention. Un dispositif de traitement de données selon l'invention comprend un transcodeur de scène 101 comprenant un décodeur 102 et un codeur 104, un transcodeur de commandes 111 et un multiplexeur 131. Des données à un premier format 121 contiennent une description de scène 122 et des commandes 123 ; elles sont converties en des données à un deuxième format 143 grâce au dispositif de traitement de données.

Dans l'exemple considéré ici, le premier format est un format BIFS textuel et le deuxième format est un format BIFS binaire. La description de scène au format BIFS textuel 122 est décodée par le décodeur 102 qui construit un graphe de scène 103 au sens de la norme décrite ci-dessus. Ce graphe de scène 103 comprend notamment une structure arborescente contenant des noeuds. Le décodeur 102 alloue un identifiant à chaque noeud, stocké dans une table de codage de noeud (en anglais « Node Coding Table ») propre à chaque noeud. Le décodeur 102 établit, grâce aux informations comprises dans toutes les tables de codage de noeud, une table de correspondance 151 entre les noms et les identifiants des noeuds. Le codeur 104 convertit ce graphe de scène 103 pour générer une description de scène au format BIFS binaire 141. Les commandes au format BIFS textuel 123 sont converties en commandes au format BIFS binaire 142 par le transcodeur de commandes 111. Une commande pouvant par exemple consister en une modification d'un noeud de la description de scène 122, le transcodeur de commandes 111 a accès à la table de correspondance 151 entre les noms et les identifiants des noeuds. Cette table de correspondance 151 est stockée, par exemple sous la forme d'un fichier, dans le décodeur 102 ; le transcodeur de commandes 111 ouvre ce fichier afin d'accéder à des informations dont il a besoin. En effet, la norme citée ci-dessus indique que seul l'identifiant d'un noeud doit être converti au format BIFS binaire. Les commandes au format BIFS textuel ne comprenant que les noms des noeuds à modifier, il est nécessaire que le transcodeur de commandes 111 ait accès aux identifiants des noeuds correspondants.

Le multiplexeur 131 regroupe la description de scène au format BIFS binaire 141 et les commandes au format BIFS binaire 142 pour générer les données au format BIFS binaire 143. Un exemple de description de scène au format BIFS textuel 122 est donné ci-après : 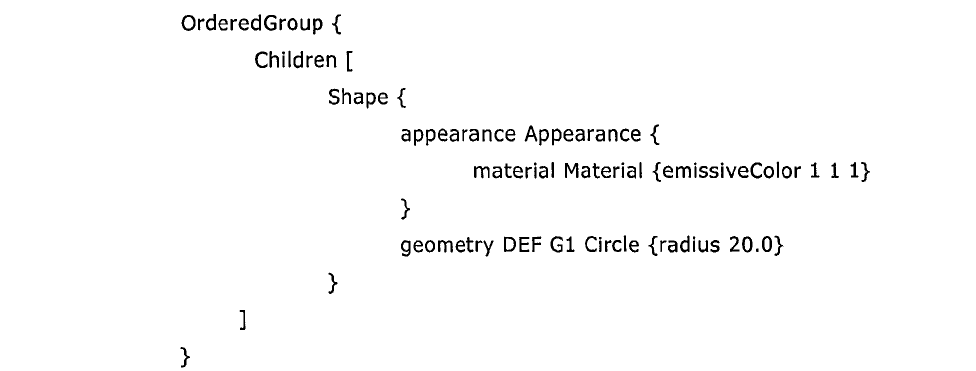 Cette description de scène au format BIFS textuel 122 décrit un cercle blanc (appelé cercle G1) ayant un rayon de 20 pixels. Un exemple de commande au format BIFS textuel 123 est donné ci-dessous :
AT 10000 REPLACE NODE G1 BY Rectangle {size 10 20}
Cette commande au format BIFS textuel 123 signifie qu'à un certain instant, le cercle G1 est remplacé par un rectangle de dimensions 10 pixels par 20 pixels. Dans cet exemple, cet instant intervient 10 secondes après un début de visualisation d'une représentation audiovisuelle de la description de scène 122. Une telle visualisation peut être effectuée par un utilisateur sur une interface graphique.

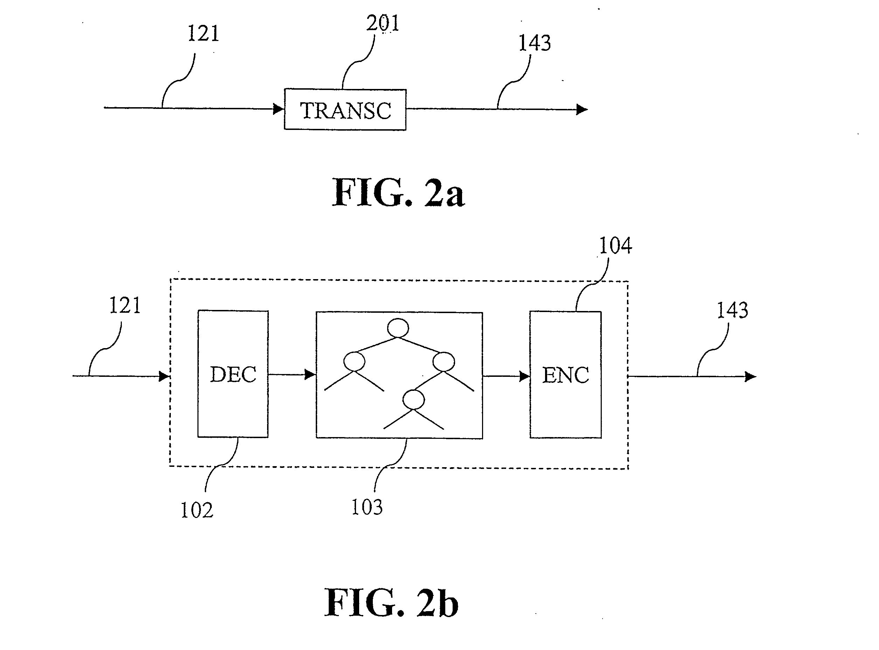

Les figures 2a et 2b illustrent deux exemples de dispositifs de traitement de données suivant l'art antérieur permettant une conversion de données d'un premier format vers un deuxième format. Sur la figure 2a, les données au premier format 121 sont converties en données au deuxième format 143 grâce à un transcodeur 201. Le transcodeur 201 se charge de convertir à la fois les descriptions de scène et les commandes du premier format vers le deuxième format. Un tel transcodeur 201 est décrit dans le document « ISO/IEC JTC1/SC29/WG11 - Title : BIFS/OD Encoder version 4.0 - Author : Zvi Lifshitz » publié en novembre 1999. Un inconvénient d'un tel dispositif de traitement de données est qu'il n'est pas convivial. En effet, un tel dispositif ne permet pas de visualiser une représentation audiovisuelle décrite par les données au premier format 121 . Ainsi, avec un tel dispositif, il est difficile, pour un auteur, d'effectuer des modifications de description de scène à l'aide d'une souris ou d'un clavier.

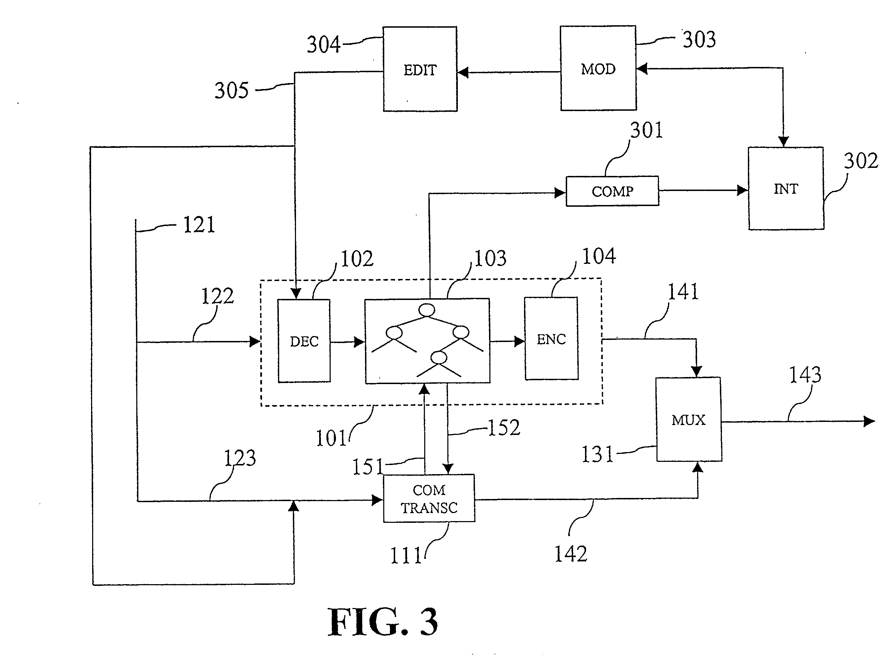

Sur la figure 2b, les données au premier format 121 sont décodées par le décodeur 102 qui construit le graphe de scène 103. Le graphe de scène 103 peut être relié à un compositeur et une interface graphique, non représentés sur la figure 2b, permettant une représentation audiovisuelle de la description de scène comprise dans le graphe de scène 103. L'interface graphique peut également être reliée à des moyens de modification et des moyens d'édition de commandes, non représentés sur la figure 2b, permettant à un auteur de modifier la représentation audiovisuelle grâce, par exemple, à une souris ou un clavier. Le graphe de scène 103 est alors modifié. Ce graphe de scène 103 est alors converti au deuxième format par le codeur 104 qui génère les données au deuxième format 143. Un tel dispositif est décrit dans un document publié par CSELT le 20 décembre 1999 intitulé « IM-1 Two Dimensional Compositor ». Un inconvénient d'un tel dispositif de traitement de données est qu'il ne permet pas d'effectuer des commandes dynamiques. En effet, le codeur 104 convertissant le graphe de scène 103, seules les informations présentes dans ce graphe de scène 103 lors d'une telle conversion seront prises en compte. Si l'on reprend l'exemple précédent du cercle G1 qui se transforme en rectangle à un certain instant, lorsque la conversion effectuée par le codeur 104 précède l'instant auquel la modification engendrée par la commande 123 prend effet, c'est le cercle qui est pris en compte et lorsque cette conversion suit cet instant, c'est le rectangle qui est pris en compte. Ainsi, pour qu'une modification de la représentation audiovisuelle décrite par les données au deuxième format 143 se produise effectivement à l'instant où elle doit se produire, il faut effectuer une conversion du graphe de scène 103 immédiatement après cet instant. Ceci engendre une quantité élevée de données à transmettre donc une vitesse de transmission des données relativement faible.
L'invention permet de pallier ces inconvénients, comme le montre un mode de réalisation particulièrement avantageux de l'invention décrit sur la figure 3.

La figure 3 illustre un dispositif de traitement de données conforme à un mode de réalisation particulièrement avantageux de l'invention. Un tel dispositif de traitement de données comprend, outre les éléments décrits sur la figure 1, un compositeur 301, une interface graphique 302, des moyens de modification 303 et des moyens d'édition 304 aptes à générer des commandes de modification au premier format 305.

Grâce au compositeur 301, une représentation audiovisuelle de la description de scène comprise dans le graphe de scène 103 peut être visualisée par un auteur sur l'interface graphique 302. L'auteur peut, grâce aux moyens de modification 303, par exemple une souris ou un clavier, modifier cette représentation audiovisuelle. Les moyens d'édition 304 permettent alors de générer les commandes de modification 305 correspondant aux modifications effectuées par l'auteur. Des systèmes auteurs connus de l'homme du métier possèdent les fonctionnalités du compositeur 301, des moyens de modification 303 et des moyens d'édition 304. Des logiciels tels Photoshop et Adobe Premiere sont des exemples de tels systèmes auteurs. Les commandes de modification 305 sont envoyées vers le décodeur 102 et vers le transcodeur de commandes 111. Grâce aux commandes de modification 305, le décodeur 102 met à jour le graphe de scène 103, de sorte que l'auteur peut visualiser sur l'interface graphique 302 les modifications qu'il a effectuées. Une telle mise à jour du graphe de scène 103 à partir d'une commande est décrite dans la norme citée ci-dessus. Ce dispositif de traitement de données permet, d'une part, de modifier un graphe de scène de façon conviviale, sans avoir à convertir tout le graphe de scène lorsqu'une modification est effectuée, puisque dans ce cas seule la commande de modification 305 doit être convertie du premier format vers le deuxième format. De ce fait, la quantité de données au deuxième format 143 transmise par unité de temps est relativement faible, ce qui permet des vitesses de transmission de données relativement élevées. D'autre part, l'auteur peut effectuer des commandes dynamiques grâce aux moyens de modification 303. En effet, le transcodeur de commandes 111 peut prendre en compte de telles commandes dynamiques, ce que ne peut pas faire le codeur 104, qui se contente de convertir au deuxième format le graphe de scène 103.

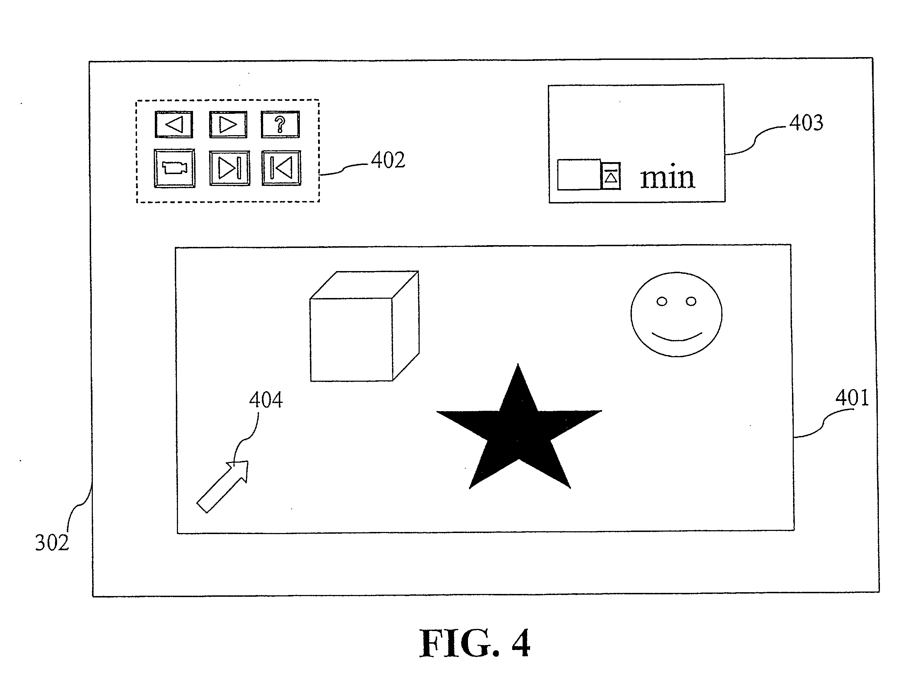

La figure 4 illustre un exemple d'interface graphique 302. L'interface graphique 302 comprend une zone de visualisation 401, des boutons d'action 402, une zone de commandes dynamiques 403 et un curseur 404. La zone de visualisation 401 permet à l'auteur d'obtenir une représentation audiovisuelle du graphe de scène 103. Le curseur 404 commandé par les moyens de modification 303 permet par exemple de sélectionner un objet de la zone de visualisation 401 afin de déplacer cet objet. Suite à une telle modification de la représentation audiovisuelle, les moyens d'édition 304 génèrent une commande destinée à modifier des paramètres de placement du noeud de la description de scène correspondant à cet objet. Les boutons d'action 402 peuvent permettre, par exemple, de modifier une couleur d'un objet sélectionné avec le curseur 404. La zone de commandes dynamiques 403 permet à l'auteur de définir à quel instant une modification engendrée par une commande doit prendre effet. L'auteur peut par exemple définir, grâce à un clavier, un tel instant, puis changer des dimensions d'un objet de la zone de visualisation 401. Un tel changement de dimensions ne prendra alors effet qu'à l'instant défini par l'auteur.

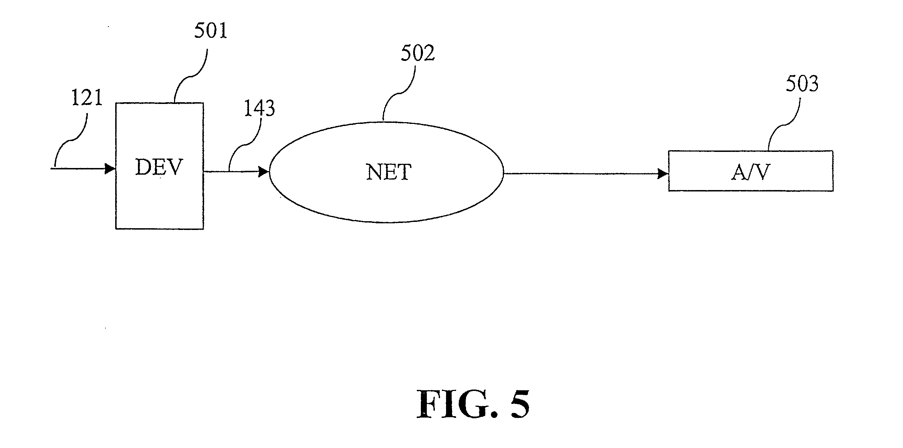

La figure 5 illustre un exemple de réseau de télécommunications utilisant au moins un dispositif de traitement de données selon l'invention. Un tel réseau de télécommunications comprend un dispositif de traitement de données 501 tel que celui représenté sur la figure 3, un média de transmission 502 et un terminal de réception 503. Les données au premier format 121 peuvent être, par exemple, stockées sur un support de données. Comme il a été détaillé dans la description de la figure 3, elles peuvent être modifiées par un auteur grâce au dispositif de traitement de données 501 qui génère les données au deuxième format 143 . Ces données 143 sont transportées par le media de transmission 502 vers le terminal de réception 503. Le media de transmission 502 peut être un media de transmission utilisé pour un réseau de télécommunication comme Internet, par exemple Ethernet. Le terminal de réception 503 peut comprendre par exemple une unité centrale d'ordinateur et un écran d'ordinateur ou un dispositif récepteur décodeur pour télévision (en anglais «Set top Box») et un écran de télévision. Il comprend des moyens de visualisation des données au deuxième format 143, par exemple un compositeur. Un tel terminal de réception est connu de l'homme du métier. Un tel réseau de télécommunications permet donc notamment à un auteur d'envoyer des données audiovisuelles à un utilisateur possédant le terminal de réception 503, et de modifier ces données de façon conviviale en temps réel. Par exemple, dans une description de scène, un des noeuds peut correspondre à des informations audiovisuelles issues d'une caméra filmant une rencontre sportive, et un autre noeud peut correspondre à un score. En fonction de l'évolution de la rencontre sportive, l'auteur peut modifier le score en modifiant le contenu du noeud correspondant. L'utilisateur sera donc informé en permanence du score de la rencontre.

La description ci-dessus en référence aux figures illustre l'invention plutôt qu'elle ne la limite. A cet égard, quelques remarques sont faites ci-dessous.

La description des figures s'appuient sur l'exemple du format BIFS. Bien entendu, l'invention s'applique à d'autres formats, éventuellement plus évolués que le format BIFS, dès lors que ces formats s'appuient sur des descriptions de scène et des commandes.

Sur la figure 4, seules quelques fonctionnalités d'une interface graphique ont été représentées. Une telle interface graphique peut contenir un grand nombre de fonctionnalités, en particulier des fonctionnalités correspondant aux commandes définies par le format utilisé.

En principe, il est possible d'implémenter le procédé selon l'invention au moyen d'un circuit intégré convenablement programmé. Un jeu d'instructions contenu dans une mémoire de programmation peut ordonner au circuit intégré d'effectuer les différentes étapes décrites précédemment. Le jeu d'instructions peut être chargé dans la mémoire de programmation par la lecture d'un support de données comme, par exemple, un disque sur lequel est codé le jeu d'instructions. La lecture peut s'effectuer par l'intermédiaire d'un réseau de communication comme, par exemple, l'Internet. Dans ce cas, un fournisseur de service mettra le jeu d'instructions à la disposition des intéressés.

## Revendications

1. Dispositif de traitement de données pour convertir des données d'un premier format vers un deuxième format, lesdites données comprenant au moins une description de scène et une commande destinée à modifier cette description de scène, **caractérisé en ce qu'**il comprend :
- un transcodeur de scène pour convertir la description de scène du premier format vers le deuxième format et
- un transcodeur de commandes pour convertir la commande du premier format vers le deuxième format et ayant accès à des informations contenues dans le transcodeur de scène.

2. Dispositif de traitement de données selon la revendication 1, **caractérisé en ce qu'**il comprend :
- une interface graphique ;
- un compositeur apte à délivrer sur l'interface graphique une représentation audiovisuelle de la description de scène ;
- des moyens de modification reliés à ladite interface graphique et aptes à effectuer au moins une modification de ladite représentation audiovisuelle et
- des moyens d'édition aptes à générer au moins une commande dans le premier format, ladite commande étant représentative de la modification.

3. Procédé de traitement de données pour convertir des données d'un premier format vers un deuxième format, lesdites données comprenant au moins une description de scène et une commande destinée à modifier cette description de scène, **caractérisé en ce qu'**il comprend :
- une étape de transcodage de scène pour convertir la description de scène du premier format vers le deuxième format et
- une étape de transcodage de commandes pour convertir la commande du premier format vers le deuxième format grâce à des informations élaborées lors de l'étape de transcodage scène.

4. Procédé de traitement de données selon la revendication 3, **caractérisé en ce qu'**il comprend :
- une étape de composition pour délivrer sur une interface graphique une représentation audiovisuelle de la description de scène ;
- une étape de modification pour effectuer au moins une modification de ladite représentation audiovisuelle ;
- une étape d'édition pour générer au moins une commande dans le premier format, ladite commande étant représentative de la modification.

5. Réseau de télécommunications comprenant au moins :
- un dispositif de traitement de données selon l'une des revendications 1 ou 2 ;
- un media de transmission destiné à transporter lesdites données au deuxième format et
- un terminal de réception susceptible de recevoir lesdites données au deuxième format.

6. Programme comprenant des instructions de code de programme pour l'exécution des étapes du procédé selon l'une des revendications 3 ou 4 lorsque ledit programme est exécuté sur un processeur.
